# EUROPÄISCHE PATENTSCHRIFT

(11) **EP 0 699 845 B1**
(45) Veröffentlichungstag und Bekanntmachung des Hinweises auf die Patenterteilung: **03.12.1997**
(21) Anmeldenummer: 95113224.0
(22) Anmeldetag: 23.08.1995
(51) Int. Cl.: F16D 65/12

(54) **Bremsscheibenanordnung**
Brake disc arrangement
Agencement de disque de frein

(30) Priorität: 26.08.1994 DE 4430346; 25.07.1995 DE 19527173
(43) Veröffentlichungstag der Anmeldung: 06.03.1996
(73) Patentinhaber: VEREINIGTE SCHMIEDEWERKE GMBH, D-44793 Bochum (DE)
(72) Erfinder: Berneiser, Karl-Heinz, Dipl.-Betriebswirt, D-44879 Bochum (DE); Murawa, Franz, Dipl.-Ing., F-44805 Bochum (DE); Schneider, Jürgen, Dr.-Ing., D-44807 Bochum (DE)
(74) Vertreter: Cohausz & Florack

(56) Entgegenhaltungen:
- EP-A- 0 327 476
- DE-A- 2 823 210
- DE-U- 9 319 490
- FR-E- 54 658

## Beschreibung

Die Erfindung betrifft eine Bremsscheibenanordnung für umlaufende Körper, wie Räder oder Wellen, mit zwei axial zusammengehaltenen ringförmigen Bremsscheiben, die jeweils aus mindestens zwei Ringsegmenten bestehen und entweder an ihrer radial inneren oder äußeren Seite Befestigungsmittel aufweisen, mit denen sie am umlaufenden Körper drehfest befestigbar sind, wobei die Bremsscheiben über dazwischen angeordnete, axial wirkenden Distanzelemente gegeneinander abgestützt sind.

Aus der gattungsgemäßen DE-OS 40 27 677 A1 ist eine Bremsscheibenanordnung mit segmentierten Bremsscheiben für ein Motorrad bekannt. Die Bremsscheiben sind durch vom inneren Scheibenloch zum äußeren Umfang verlaufende Stege zueinander beabstandet und miteinander verbunden. Die Stege sind in Umfangsrichtung gebogen und weisen wechselweise Aussparungen und Vorsprünge auf, wobei die Vorsprünge in Öffnungen der Ringsegmente eingepreßt sind. Mehrere benachbarte Stege werden über die Stoßfugen zwischen den Segmenten geführt. Dadurch sind die Segmente ausreichend positioniert und zuverlässig miteinander verbunden. Durch die Stege wird eine geführte Belüftung gewährleistet.

Solche Bremsscheibenanordnungen sind insbesondere für eine hohe Beanspruchung konzipiert, da über die Innenbelüftung ein Großteil der dissipierten Wärme abgeführt werden kann. Nachteilig an einer solchen Bremsscheibenanordnung ist, daß zur sicheren axialen, radialen und tangentialen Verbindung der Segmente untereinander eine Mehrzahl von Stegen erforderlich ist, wodurch ein relativ hohes Gewicht in Kauf genommen werden muß. Insbesondere bei Hochgeschwindigkeits-Schienenfahrzeugen ist man jedoch bemüht, die zu beschleunigende Masse gering zu halten. Des weiteren ist die Montage insofern schwierig, als daß die Vorsprünge in die Öffnungen der Ringsegmente eingepreßt werden müssen. Zwar ist eine entsprechende Montage für solche Bremsscheibenanordnungen bei Motorrädern mit relativ kleinen Bremsscheiben handhabbar. Bei großen Bremsscheiben, wie sie beispielsweise bei Schienenfahrzeugen verwendet werden, sind solche Preßsitze in der Montage wenig praktikabel.

Bei einer anderen, aus der US-PS 5 158 511 bekannten Bremsscheibenanordnung für Schienenräder ist an jeder Seite eines Radsteges eine Bremsscheibe angeordnet, wobei die Bremsscheiben mit Durchgangsschrauben am Radsteg befestigt und daran nahezu vollflächig axial abgestützt sind. Jede Bremsscheibe ist in zwei Ringsegmente unterteilt. Die Stoßkanten benachbarter Ringsegmente sind derart profiliert, daß sie sich in montiertem Zustand hintergreifen, so daß die an den Stoßfugen der Ringsegmente tangential angreifenden Zentrifugalkräfte von den Stoßkantenprofilen aufgenommen werden. Aufgrund der Unterteilung der Bremsscheiben in Ringsegmente wird ein Auswechseln der Bremsscheiben ohne Demontage des Fahrzeugrads oder gar der Fahrzeugwelle ermöglicht. Für Hochgeschwindigkeitsfahrzeuge ist diese Bremsscheibenanordnung jedoch nicht geeignet, da eine Innenbelüftung der Bremsscheiben nicht vorhanden ist. Somit kann die dissipierte Wärmeenergie unter Umständen nicht schnell genug abgeführt werden, so daß die Gefahr einer Überhitzung der Bremsscheiben besteht.

Eine weitere Bremsscheibenanordnung ist aus der DE-OS 38 05 498 bekannt. Sie weist zu beiden Seiten des Radsteges eines Fahrzeugrades einteilige Bremsscheiben auf, die mit ihren Innenumfang über Schraubenbolzen an der Radnabe befestigt sind. Am Außenumfang der beiden Bremsscheiben sind radial auskragende Befestigungslaschen vorgesehen, durch die sich Durchgangsschrauben erstrecken. Diese Durchgangsschrauben durchsetzen Distanzbuchsen, die in Bohrungen des Radsteges liegen und deren stirnseitige Enden sich jeweils an einer zugewandten Auflagefläche der Befestigungslaschen abstützen. Durch die am Außenumfang der Bremsscheiben angeordneten Durchgangsschrauben und Distanzelemente wird die Bremsscheibenanordnung axial versteift, so daß eine gleichmäßige Belastung beider Bremsscheiben durch die Bremsklötze gewährleistet ist. Nachteilig ist, daß ein Austausch der einteiligen Bremsscheiben ohne eine Demontage der Fahrzeugräder oder gar der Fahrzeugwelle nicht möglich ist. Außerdem wird durch die Befestigungslaschen die rotierende Masse erhöht.

Der Erfindung liegt die Aufgabe zugrunde, die gattungsgemäße Bremsscheibenanordnung derart zu verbessern und auszugestalten, daß sie bei leichter Montage und Demontage und vergleichsweise geringer Masse großen mechanischen Belastungen gewachsen ist.

Diese Aufgabe wird mit der Bremsscheibenanordnung der eingangs genannten Art dadurch gelöst, daß die Stoßfugen einer Bremsscheibe gegenüber den Stoßfugen der anderen Bremsscheibe drehversetzt sind und daß die Ringsegmente über an den Stoßfugen benachbarter Ringsegmente ausgebildete, die Tangentialkräfte aufnehmende, formschlüssig wirkende Verriegelungselemente miteinander verbunden sind.

Ebenso wird die Aufgabe dadurch gelöst, daß die Stoßfugen einer Bremsscheibe gegenüber den Stoßfugen der anderen Bremsscheibe drehversetzt sind und paarweise zusammenwirkende Distanzelemente in einer axialen und radialen Ebene einander zugeordnete Stützflächen aufweisen, die die Tangentialkräfte an den Stoßfugen aufnehmen.

Indem die Stoßfugen der einen Bremsscheibe zu denen der anderen Bremsscheibe drehversetzt angeordnet sind, ist die axiale Position zweier benachbarter Ringsegmente zueinander über die Distanzelemente durch das Ringsegment der anderen Bremsscheibe festgelegt ist. Eine axiale Bewegung von benachbarten Ringsegmenten einer Bremsscheibe relativ zueinander ist nicht möglich. Somit werden die Bremsscheiben beim Bremsen gleichmäßig belastet, so daß ein lokaler und damit vorzeitiger Verschleiß der Bremsscheiben unterbunden wird. Die an den Stoßfugen tangential wirkenden Zentrifugalkräfte werden durch die an den Stoßkanten angeordneten Verriegelungselemente aufgenommen. Die formschlüssige Verbindung, beispielsweise eine Schwalbenschwanzverbindung, ist geeignet, selbst die hohen Zentrifugalkräfte bei Bremsscheiben für Hochgeschwindigkeitsfahrzeuge aufzunehmen. Dadurch ist die Belastung der Distanzelemente in tagentialer Richtung wesentlich reduziert, so daß sie entsprechend geringer dimensioniert werden können. Dadurch ergibt sich ein Gewichtsvorteil gegenüber anderen Bremsscheibenanordnungen.

Zusätzlich zu den Verriegelungselementen an den Stoßkanten der Ringsegmente oder anstatt dieser Verriegelungselemente können die tangentialen Kräfte an den Stoßfugen auch über in einer Radialebene oder einer dazu geneigten Ebene Stützflächen paarweise zusammenwirkender Distanzelemente aufgenommen werden. Dadurch werden die tangentialen Kräfte an der Stoßfuge einer Bremsscheibe auf das in diesem Bereich nicht unterbrochene Ringsegment der anderen Bremsscheibe übertragen, so daß die Ringsegmente an der Stoßfuge zusammengehalten werden.

Nach einer besonderen Ausgestaltung sind die Distanzelemente an den Rückseiten der Bremsscheiben befestigt oder einstückig mit diesen verbunden. Indem dadurch auf Durchgangsschrauben verzichtet werden kann, wird weder die Wirkfläche der Bremsscheiben vermindert, noch durch den Einsatz von Befestigungslaschen die rotierende Masse der Bremsscheiben unnötig erhöht.

Nach einer weiteren Ausgestaltung stehen einander zugeordnete Distanzelemente über Schiebe- oder Steckmechanismen miteinander in Eingriff. Hierdurch wird die Montage erheblich erleichtert, da ein aufwendigeres Verschrauben entfällt.

Auf einfache Weise können die Distanzelemente aus den Bremsscheiben auskragende Stifte umfassen, wobei paarweise einander zugeordnete Stifte jeweils mit einer Paßhülse kraftschlüssig verbunden werden.

In anderer Ausführung können die Distanzelemente über eine Schnappverbindung miteinander verbunden sein. Durch ein "Aufstecken" der einen Bremsscheibe auf die andere werden die Bremsscheiben durch einfaches Zuschnappen der Distanzelemente axial verriegelt.

Auf ähnliche Weise vorteilhaft können die Distanzelemente als Klammern miteinander verbunden sein.

In einer weiteren Ausführungsform werden die Distanzelemente über eine Feder-Nut-Verbindung mit in Umfangsrichtung verlaufenden Schieberflächen verbunden. So lassen sich die Bremsscheiben durch ein Verdrehen zueinander ebenso einfach axial verriegeln.

Bei jeder dieser Ausführungformen ist es zweckdienlich, die Distanzelemente achsparallel anzuordnen.

Darüber hinaus ist es sinnvoll, die Stoßfugen zur Radialebene geneigt anzuordnen. Dadurch wird erreicht, daß sich die Ringsegmente einer Bremsscheibe in radialer Richtung gegenseitig abstützen, so daß die an den Stoßfugen ausgebildeten Verriegelungselemente entlastet werden. Darüber hinaus wird ein sanfter Übergang für einen Bremsklotz von einem Ringsegment auf das nächste gewährleistet.

Schließlich können die Distanzelemente in vorteilhafter Ausgestaltung mindestens teilweise Dehnkörper aufweisen oder als Dehnkörper, insbesondere Dehnschrauben, ausgebildet sein. Damit wird der Tatsache Rechnung getragen, daß sich die einzelnen Bremsscheiben während des Bremsvorganges durch das Erhitzen unterschiedlich stark ausdehnen können.

Im folgenden wird die Erfindung anhand einer Ausführungsbeispiele darstellenden Zeichnung näher erläutert. Im einzelnen zeigen:
- Fig. 1: eine aus zwei Ringsegmenten bestehende Bremsscheibe vor dem Zusammenbau in Vorderansicht,
- Fig. 2: die Bremsscheibe gemäß Fig. 1 im Teilquerschnitt nach der Linie I-I der Fig. 1,
- Fig. 3: eine Bremsscheibenanordnung aus zwei Bremsscheiben nach dem Zusammenbau in Vorderansicht,
- Fig. 4: die Bremsscheibenanordnung gemäß Fig. 3 in Vorderansicht und im Teilquerschnitt,
- Fig. 5: ein Ringsegment der Bremsscheibenanodnung gemäß Fig. 3 in Ansicht der Innenseite,
- Fig. 6: das Ringsegment der Fig. 5 in Seitenansicht,
- Fig. 7: die Bremsscheibenanordnung gemäß Fig. 3 in Vorderansicht und im Teilquerschnitt in einer zur Fig. 4 abgewandelten Ausführung und
- Fig. 8: die Bremsscheibenanordnung gemäß Fig. 5 in Vorderansicht und im Teilquerschnitt in einer weiteren zu den Fig. 4 bis 7 abgewandelten Ausführung,
- Fig. 9: eine Bremsscheibenanordnung in Vorderansicht in einer weiteren zu den Fig. 4 bis 8 abgewandelten Ausführung,
- Fig.10: eine Bremsscheibenanordnung in Vorderansicht in einer weiteren zu den Fig. 4 bis 9 abgewandelten Ausführung und
- Fig.11: eine Bremsscheibenanordnung aus zwei Ringsegmenten nach dem Zusammenbau in einer zur Fig. 3 anderen Ausführung,

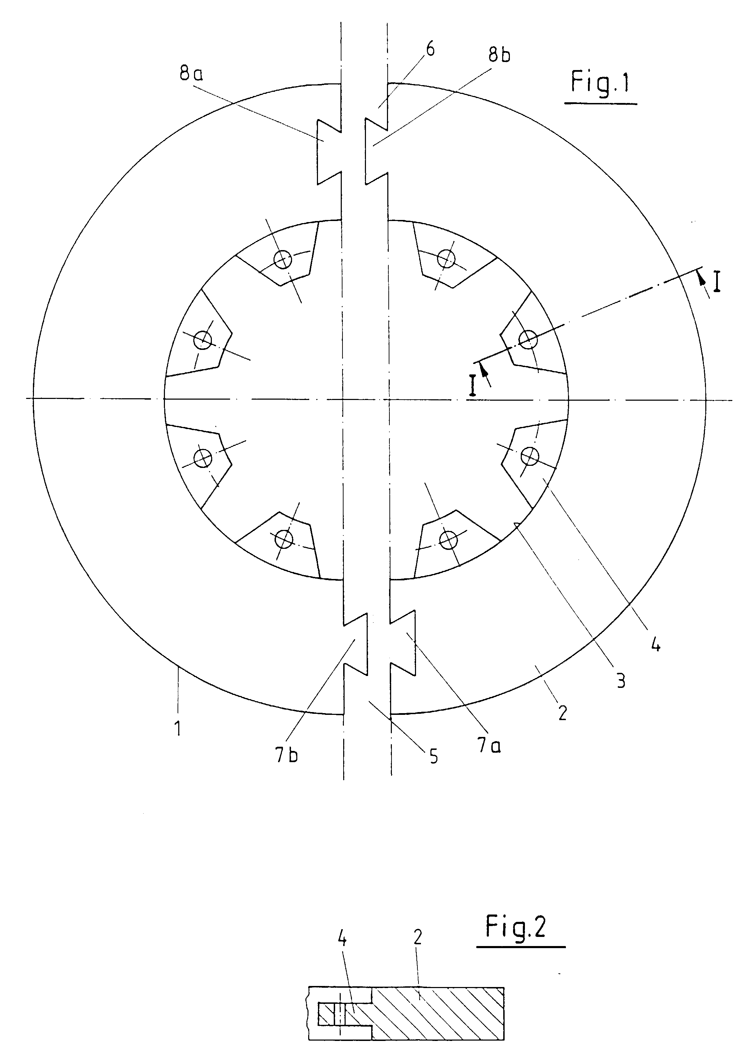

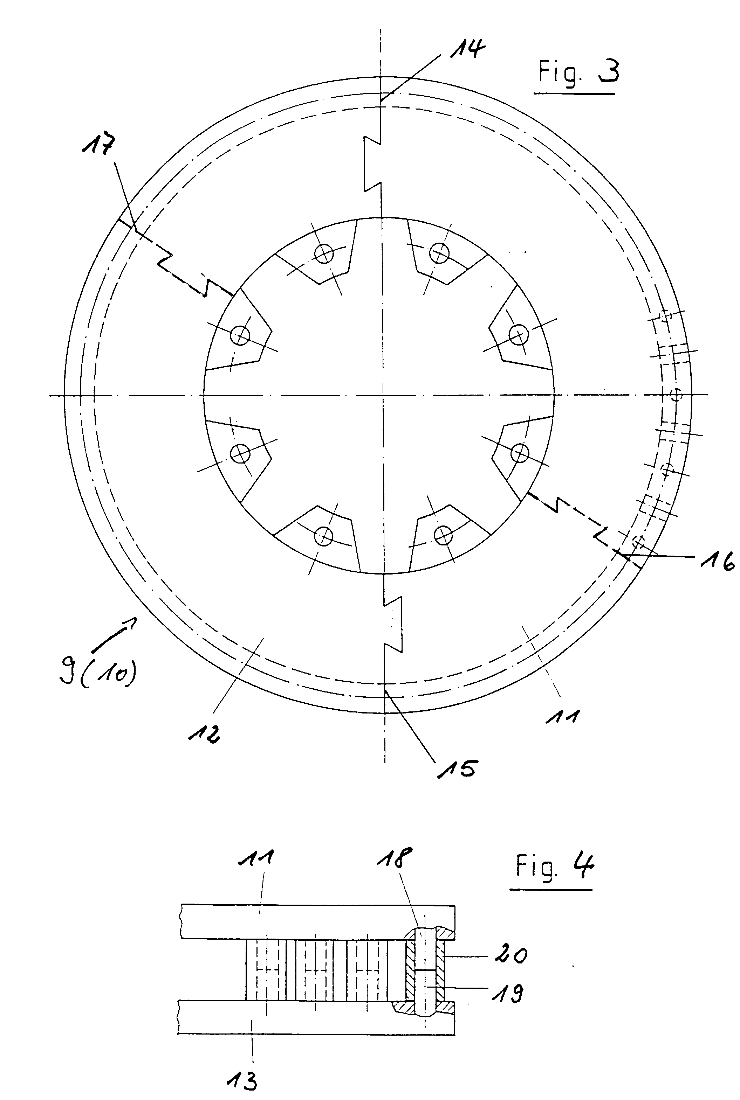

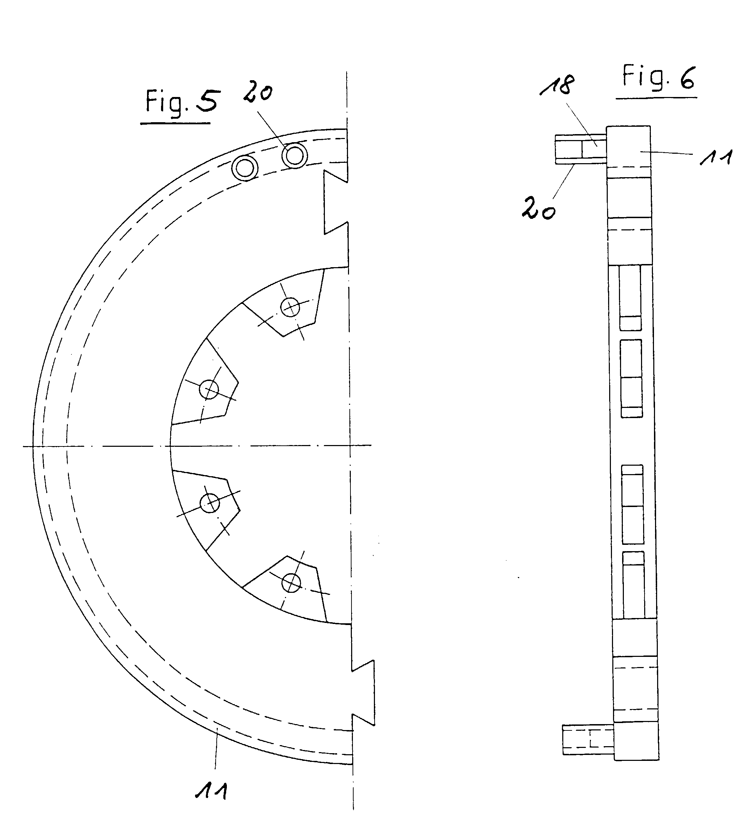

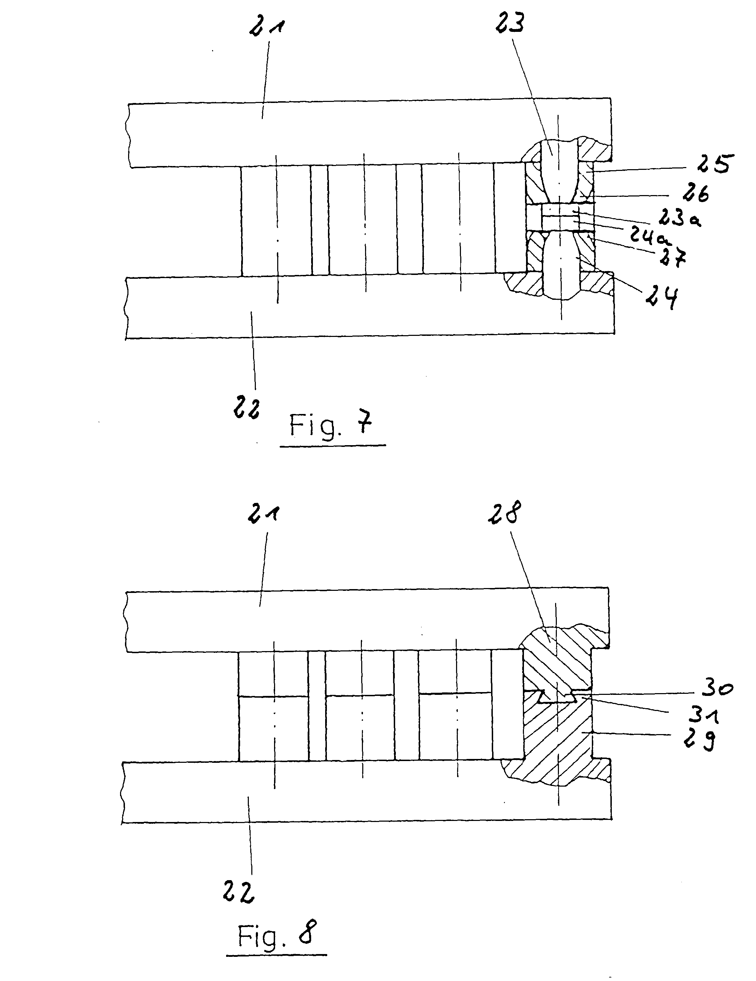

Die in Fig. 1 und 2 dargestellte Bremsscheibe besteht aus zwei gleich großen Ringsegmenten 1,2. Am Rand 3 des mittigen Scheibenloches befindet sich eine Vielzahl von Befestigungsmitteln 4 in Form von Anschraublaschen. Mit Schraubenbolzen lassen sich damit die Ringsegmente 1,2 an einem Rad oder einer Welle eines Schienenfahrzeuges drehfest anschließen.

An den Stoßfugen 5,6 der beiden Ringsegmente 1,2 sind formschlüssige Verriegelungselemente ausgebildet, die jeweils aus einer Nut 7a,8a und einer Feder 7b,8b in Schwalbenschwanzausführung besteht. Die Anlageflächen an den Stoßfugen 5,6 erstrecken sich achsparallel, so daß sich die beiden Ringsegmente 1,2 zur formschlüssigen Verbindung ihrer Verriegelungselemente 7a,7b,8a,8b axial ineinanderschieben lassen.

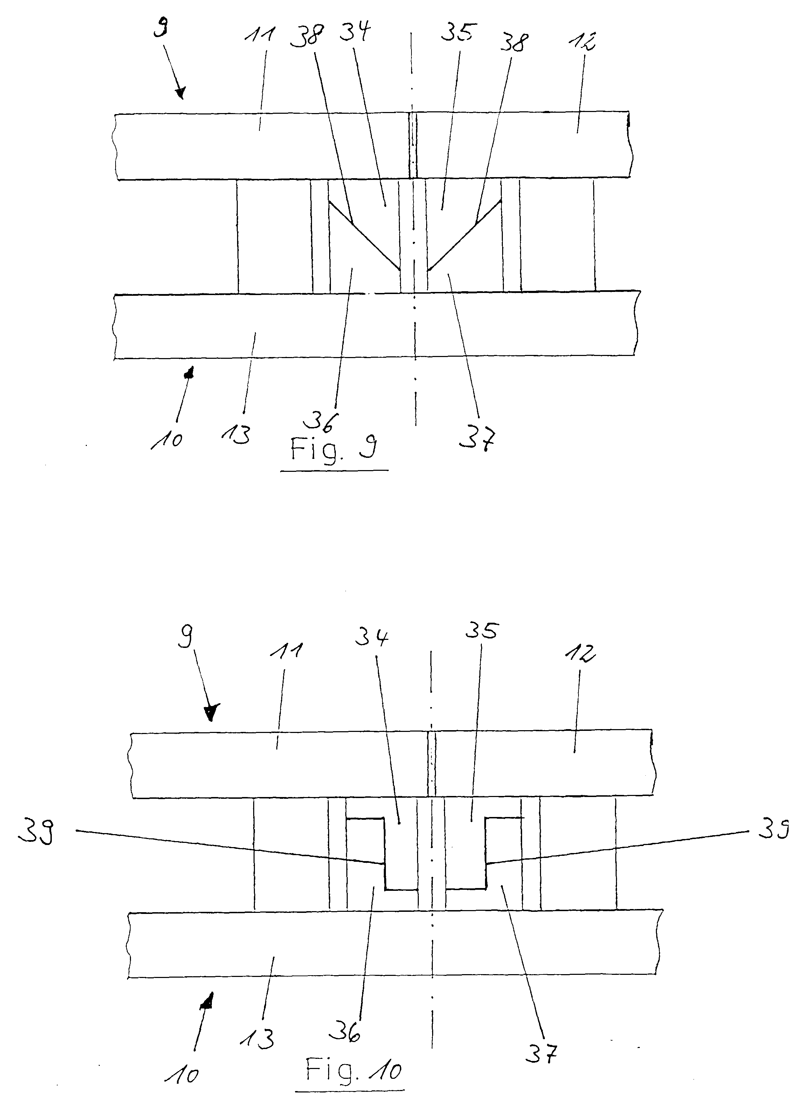

Das Ausführungsbeispiel der Fig. 3 bis 6 zeigt eine Bremsscheibenanordnung mit zwei aus Ringsegmenten 11,12,13 zusammengesetzten Bremsscheiben 9,10. Die Stoßfugen 14 bis 17 der Ringsegmente 11,12,13 der Bremsscheiben 9,10 sind winkelversetzt zueinander angeordnet. An der Rückseite jedes Ringsegmentes 11,12,13 sind Stifte 18,19 angeformt, auf der Paßhülsen 20 stecken. Die Stifte 18,19 mit den Paßhülsen 20 bilden für die beiden Bremsscheiben die Distanzelemente. Die Distanzelemente bewirken bei sich drehender Bremsscheibenanordnung eine Innenbelüftung der Bremsscheibenanordnung. Bei der gemeinsamen Anwendung der Distanzelemente und der Winkelversetzung der Stoßfugen 14-17 der beiden Bremsscheiben 9,10 ergibt sich zusätzlich zu der Lüftungsfunktion mittels der Distanzelemente eine Entlastung der Verriegelung an den Stoßfugen, weil die Stifte 18,19 mit den Paßhülsen 20 auch Radialkräfte aufnehmen. Dadurch werden die an den Bremsscheiben wirksamen radialen Kräfte gegenseitig aufgefangen.

Beim Ausführungsbeispiel der Fig. 7 sind Paßhülsen 25 vorgesehen, die die beiden Bremsscheiben 21,22 zusätzlich axial formschlüssig verriegeln. Dafür weist jeder Stift 23,24 einen Kopf 23a,24a auf, hinter dem die Paßhülse 25 mit federnden Nasen 26,27 einrastet.

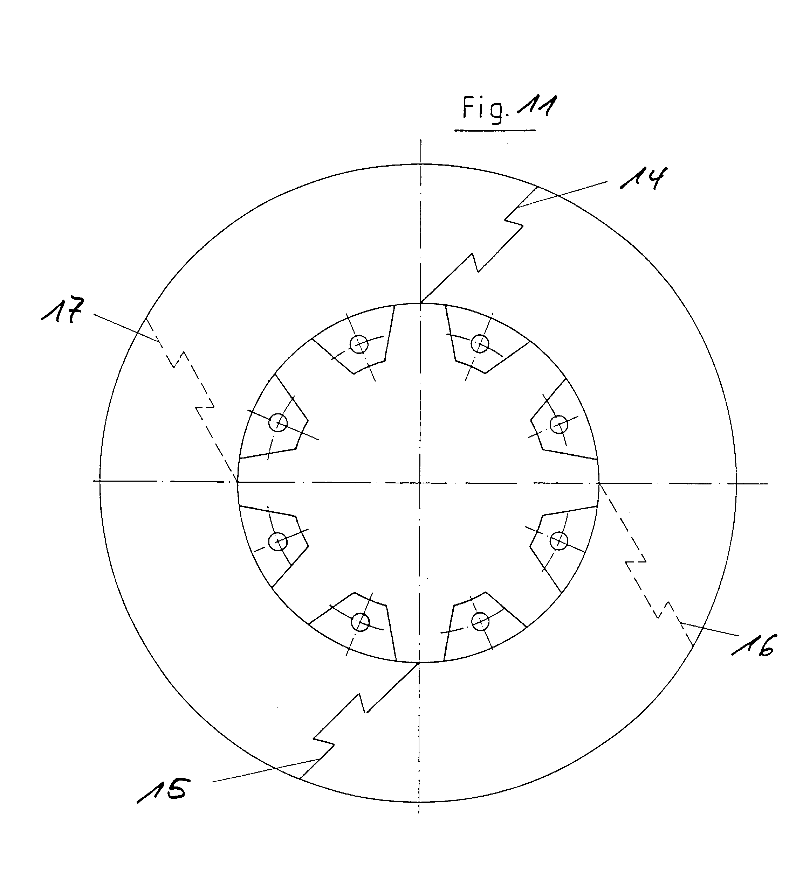

Das Ausführungsbeispiel der Fig. 8 unterscheidet sich vom Ausführungsbeispiel der Fig. 4 dadurch, daß statt rückseitiger Stifte und Hülsen Ansätze 28,29 vorgesehen sind, die eine zur Scheibenebene parallele, tangential sich erstreckende Feder-Nut-Verbindung 30,31 aufweisen. Bei diesem Ausführungsbeispiel erfolgt der Zusammenbau in der Weise, daß zunächst aus den Ringsegmenten die Bremsscheiben 32,33 zusammengesetzt werden. Anschließend erfolgt durch Verdrehen der Bremsscheiben 32,33 gegeneinander die Verriegelung der Feder-Nut-Verbindung 30,31.

Sowohl beim Ausführungsbeispiel der Fig. 7 als auch dem Ausführungsbeispiel der Fig. 8 können die Stifte 23,24 und die Ansätze 28,29 ein Dehnungselement haben. Statt der beschriebenen Lösungen ist auch eine Dehnschraube einsetzbar. In jedem Fall dienen diese axialen Distanzelemente dazu, einem Verformen der Bremsscheiben 22,23 unter Bremswärme entgegenzuwirken.

Das Ausführungsbeispiel der Fig. 9 und 10 unterscheidet sich vom Ausführungsbeispiel der Fig. 4 dadurch, daß die insbesondere an einer Stoßfuge paarweise zusammenwirkenden rückseitigen Stifte 34,35,36,37 Stützflächen 38,39 aufweisen. Die Stützflächen 38,39 liegen in einer Radialebene oder einer dazu geneigten Ebene. Dabei sind die Stifte 36,37, der der Stoßfuge gegenüberliegenden Bremsscheibe derart angeordnet, daß ihre Stützflächen 38,39 den an den Stoßfugen angreifenden und durch die der Stoßfuge benachbarten Stifte 34,35 übertragenen Tangentialkräften entgegen wirken. Dadurch werden die Verriegelungselemente an den Stoßkanten der Ringsegmente wesentlich entlastet. Je nach Auslegung der Stifte 34-37 können die Verriegelungselemente sogar entfallen.

Das Ausführungsbeispiel der Fig. 11 unterscheidet sich von dem der Fig. 5 bis 8 in der Hinsicht, daß die Stoßfugen 14-17 nicht radial, sondern geneigt zur Radialebene verlaufen.

Es versteht sich, daß die formschlüssige Verbindung der Ringsegmente 1,2,11,12,13 an den Stoßfugen 5,6,14-17, aber auch die Feder-Nut-Verbindung 30,31 der Ansätze 28,29 vielfältig ausgebildet sein kann. Neben der schwalbenschwanzförmigen Form läßt sich zum Beispiel auch eine Hammerkopfform verwirklichen. Wichtig ist, daß in jedem Fall Formschluß in tangentialer beziehungsweise axialer Richtung wirksam ist, um die radialen Zentrifugalkräfte beziehungsweise die axialen Verformungskräfte aufnehmen zu können. Auch die Stützflächen 38,39 können anders gestaltet sein. So können sie auch Profile aufweisen, durch die zusätzlich eine axiale Abstützung der Bremsscheiben darüber erfolgt. Wesentlich hierbei ist lediglich, daß die Stützflächen mindestens einen Teil der an den Stoßfugen angreifenden tangentialen Kräfte aufnehemen können. Ebenso ist es möglich, mehrere der den Stoßfugen benachbarten oder alle Distanzelemente mit entsprechenden Stützflächen zu versehen.

## Patentansprüche

1. Bremsscheibenanordnung für umlaufende Körper, wie Räder oder Wellen, mit zwei axial zusammengehaltenen ringförmigen Bremsscheiben (9,10,21,22), die jeweils aus mindestens zwei Ringsegmenten (1,2,11,12,13) bestehen und entweder an ihrer radial inneren oder äußeren Seite Befestigungsmittel (4) aufweisen, mit denen sie am umlaufenden Körper drehfest befestigbar sind, wobei die Bremsscheiben (9,10,21,22) über dazwischen angeordnete, axial wirkenden Distanzelemente gegeneinander abgestützt sind,
**dadurch gekennzeichnet**, daß die Stoßfugen (14,15) einer Bremsscheibe (9) gegenüber den Stoßfugen (16-17) der anderen Bremsscheibe (10) drehversetzt sind und daß die Ringsegmente (1,2,11,12,13) über an den Stoßfugen (5,6 und 14-17) benachbarter Ringsegmente (1,2,11,12,13) ausgebildete, die Tangentialkräfte aufnehmende, formschlüssig wirkende Verriegelungselemente miteinander verbunden sind.

2. Bremsscheibenanordnung nach dem Oberbegriff des Anspruchs 1 oder nach Anspruch 1,
**dadurch gekennzeichnet**, daß die Stoßfugen (14,15) einer Bremsscheibe (9) gegenüber den Stoßfugen (16,17) der anderen Bremsscheibe (10) drehversetzt sind und daß paarweise zusammenwirkende Distanzelemente (34,35,36,37) in einer Radialebene oder einer dazu geneigten Ebene einander zugeordnete Stützflächen (38,39) aufweisen, die die Tangentialkräfte an den Stoßfugen aufnehmen.

3. Bremsscheibenanordnung nach Anspruch 1 oder 2,
**dadurch gekennzeichnet**, daß die Distanzelemente an den Rückseiten der Bremsscheiben (9,10,21,22) befestigt oder einstückig damit verbunden sind.

4. Bremsscheibenanordnung nach einem der Ansprüche 1 bis 3,
**dadurch gekennzeichnet**, daß paarweise einander zugeordnete Distanzelemente über Schiebe- oder Steckmechanismen miteinander in Eingriff stehen.

5. Bremsscheibenanordnung nach Anspruch 4,
**dadurch gekennzeichnet**, daß die Distanzelemente aus den Bremsscheiben auskragende Stifte (18,19) umfassen, wobei paarweise einander zugeordnete Stifte (18,19) mit einer Paßhülse (20) kraftschlüssig verbunden werden.

6. Bremsscheibenanordnung nach Anspruch 4,
**dadurch gekennzeichnet**, daß die Distanzelemente über eine Schnappverbindung (23-27) miteinander verbunden sind.

7. Bremsscheibenanordnung nach Anspruch 4,
**dadurch gekennzeichnet**, daß die Distanzelemente über Klammern miteinander verbunden sind.

8. Bremsscheibenanordnung nach Anspruch 4,
**dadurch gekennzeichnet**, daß die Distanzelemente über eine Feder-Nut-Verbindung (30,31) mit in Umfangsrichtung verlaufenden Schieberflächen verbunden sind.

9. Bremsscheibenanordnung nach einem der Ansprüche 1 bis 8,
**dadurch gekennzeichnet**, daß die Distanzelemente achsparallel angeordnet sind.

10. Bremsscheibenanordnung nach Anspruch 1 bis 9,
**dadurch gekennzeichnet**, daß die Stoßfugen (14-17) zur Radialebene geneigt angeordnet sind.

11. Bremsscheibenanordnung nach Anspruch 1 bis 10,
**dadurch gekennzeichnet**, daß die Distanzelemente mindestens teilweise Dehnkörper aufweisen oder als Dehnkörper, insbesondere Dehnschrauben, ausgebildet sind.

## Claims

1. A brake disc arrangement for rotating members; such as wheels or shafts, having two annular brake discs (9, 10, 21, 22) which are held together axially and which each consist of at least two annular segments (1, 2, 11, 12, 13) and have on either their radially inner or outer side attaching means (4) by which they can be non-rotatably attached to the rotating member, the brake discs (9, 10, 21, 22) bearing against one another via interposed axially operating spacing elements,
characterized in that the butt joints (14, 15) of one brake disc (9) are rotationally offset in relation to the butt joints (16, 17) of the ether brake disc (10), and the annular segments (1, 2, 11, 12, 13) are connected to one another via positively operating locking elements formed at the butt joints (5; 6; 14-17) of adjacent annular segments (1, 2, 11, 12 13) and absorbing the tangential forces.

2. A brake disc arrangement according to the preamble of claim 1 or according to claim 1.
characterized in that the butt joints (14, 15) of one brake disc (9) are rotationally offset in relation to the butt joints (16, 17) of the other brake disc (10), and spacing elements (34, 35, 36, 37) cooperating in pairs have in a radial plane or a plane inclined thereto mutually associated supporting surfaces (38, 39) which absorb the tangential forces at the butt joints.

3. A brake disc arrangement according to claims 1 or 2, characterized in that the spacing elements are attached to the rear sides of the brake discs (9, 10, 21, 22) or are unitarily connected thereto.

4. A brake disc arrangement according to one of claims 1 to 3, characterized in that spacing elements mutually associated in pairs engage with one another via sliding or insertion mechanisms.

5. A brake disc arrangement according to claim 4,
characterized in that the spacing elements comprise pins (18, 19) projecting from the brake discs, while pins (18, 19) mutually associated in pairs are non-positively connected with a fitting sleeve (20).

6. A brake disc arrangement according to claim 4,
characterized in that the spacing elements are connected to one another via a snap connection (23-27).

7. A brake disc arrangement according to claim 4,
characterized in that the spacing elements are connected to one another via clamps.

8. A brake disc arrangement according to claim 4,
characterized in that the spacing elements are connected via a spring-and-groove connection (30, 31) with peripherally extending slider surfaces.

9. A brake disc arrangement according to one of claims 1 to 8, characterized in that the spacing elements are disposed axis-parallel.

10. A brake disc arrangement according to claims 1 to 9, characterized in that the butt joints (14-17) are disposed inclined to the radial plane.

11. A brake disc arrangement according to claims 1 to 10, characterized in that at least some of the spacing elements have expansion members or take the form of expansion members, more particularly necked-down bolts.

## Revendications

1. Agencement de disques de freinage pour corps rotatifs tels que des roues ou des arbres, comprenant deux disques de frein annulaires (9, 10, 21, 22) maintenus ensemble axialement, chaque disque étant constitué d'au moins deux segments de couronne (1, 2, 11, 12, 13) et comportant, soit sur son côté radialement intérieur, soit sur son côté radialement extérieur, des moyens de fixation (4) par lesquels les disques peuvent être fixés au corps rotatif de manière à en être rendus solidaires en rotation, les disques (9, 10, 21, 22) s'appuyant l'un contre l'autre par l'intermédiaire d'entretoises agissant axialement, interposées entre eux, caractérisé en ce que les joints (14, 15) d'un disque (9) sont décalés dans le sens circonférentiel par rapport aux joints (16-17) de l'autre disque, et en ce que les segments de couronne (1, 2, 11, 12, 13) sont reliés entre eux par l'intermediaire d'éléments de verrouillage à épousement de forme prévus aux emplacements des joints (5, 6 et 14 à 17) de segments de couronne voisins (1, 2, 11, 12, 13) et reprenant les forces tangentielles.

2. Agencement suivant le préambule de la revendication 1, caractérisé en ce que les joints (14, 15) d'un disque (9) sont décalés dans le sens circonférentiel par rapport aux joints (16, 17) de l'autre disque, et en ce que des entretoises (34, 35, 36, 37) coopérant par paires comportent des surfaces d'appui (38, 39) associées situées dans un plan radial ou dans un plan incliné par rapport à un plan radial, et reprenant les forces tangentielles à l'emplacement des joints.

3. Agencement suivant la revendication 1 ou 2, caractérisé en ce que les entretoises sont fixées sur les faces arrière des disques (9, 10, 21 à 22) ou sont réalisées d'une seule pièce avec cette face arrière.

4. Agencement suivant l'une des revendications 1 à 3, caractérisé en ce que des entretoises associées par paires sont en prise mutuelle par l'intermédiaire d'un mécanisme à coulissement ou à emboîtement.

5. Agencement suivant la revendication 4, caractérisé en ce que les entretoises comprennent des tiges (18, 19) en saillie sur les disques, des tiges (18, 19) associées par paires étant reliées par adhérence au moyen d'un manchon d'adaptation (20).

6. Agencement suivant la revendication 4, caractérisé en ce que les entretoises sont reliées par une liaison encliquetée (23 à 27).

7. Agencement suivant la revendication 4, caractérisé en ce que les entretoises sont reliées par l'intermédiaire de griffes.

8. Agencement suivant la revendication 4, caractérisé en ce que les entretoises sont reliées par l'intermédiaire d'une liaison à clavette et rainure (30, 31) comportant des surfaces de glissement s'étendant dans la direction circonférentielle.

9. Agencement suivant l'une des revendications 1 à 8, caractérisé en ce que les entretoises sont disposées parallèlement à l'axe.

10. Agencement suivant l'une des revendications 1 à 9, caractérisé en ce que les joints (14 à 17) sont disposés de façon inclinée par rapport à un plan radial.

11. Agencement suivant l'une des revendications 1 à 10, caractérisé en ce que les entretoises comprennent au moins partiellement des corps à allongement ou sont réalisées au moins partiellement sous la forme de corps à allongement, en particulier de vis à allongement.
